## Europäisches Patentamt

## European Patent Office

## Office européen des brevets

(11) Publication number: **0 157 452**
A1

# EUROPEAN PATENT APPLICATION

(21) Application number: **85200406.8**

(22) Date of filing: **18.03.85**

(51) Int. Cl.⁴: **B 65 G 57/24,** B 65 B 35/50, B 65 G 57/06

(30) Priority: **16.03.84 NL 8400844**

(43) Date of publication of application: **09.10.85** Bulletin 85/41

(84) Designated Contracting States: **BE DE FR GB NL**

(71) Applicant: **de Feijter, François Pieter, Braakmanlaan 16, NL-4521 AA Biervliet (NL)**

(72) Inventor: **de Feijter, François Pieter, Braakmanlaan 16, NL-4521 AA Biervliet (NL)**

(74) Representative: **Urbanus, Henricus Maria, Ir., c/o Vereenigde Octrooibureaux Nieuwe Parklaan 107, NL-2587 BP 's-Gravenhage (NL)**

(54) **A method of, and apparatus for, palletizing bagged products.**

(57) A method of palletizing bagged products, such as onions, potatoes or the like, in which the bags are deposited in bonded relationship on a pallet arranged in a cage (6) while using corner supports, and subsequently, one or more straps are fastened around them. A lifting platform (8) for the pallet is movable through the cage open at the top and bottom end, on which platform filled bags, previously arranged in a bonded pattern, are deposited.

EP 0 157 452 A1

-1-

Title: A method of, and an apparatus for, palletizing bagged products.

The present invention relates to a method of palletizing bagged products, such as onions, potatoes or the like, wherein the bags are deposited in bonded relationship on a pallet arranged in a cage, while using corner supports, and subsequently one or more straps are fastened around them.

In such a hitherto employed method a pallet is introduced into a cage that is entirely open on one side and on which, after the corner supports have been installed, the filled bags are manually deposited in bonded relationship. After deposition of one or more layers, a strap is wrapped thereabout, partly by hand. After the pallet has been entirely loaded, it is removed by means of a fork lift truck.

The above operations require substantial manpower, are heavy and timeconsuming.

In a different palletizing method, use is made of a substantially entirely closed cardboard box wherein the filled bags are manually deposited in bonded relationship. This method therefore does not use straps.

It is an object of the present invention to rationalize the above methods.

To this effect the method of the above described type is characterized in that a lifting platform for the pallet is movable through the cage, which is open at the top and bottom end, on which platform previously bonded, filled bags are deposited. By using a cage open at the top and bottom end, there can be obtained a fixed, small interspace between the feeding belt and the deposition surface whereon the previously bonded, filled bags can be conveniently deposited in the proper position.

In this method, the corner supports arranged outwardly of the cage around the stack to be formed may be moved exteriorly along the cage in downward direction to underneath the level of the cage and subsequently be connected to the pallet e.g. by stapling. After this connection has been effected, the corner supports are automatically moved downwards along

0157452

-2-

with the pallets. In this method, the corner supports are installed only after at least a part of the stack has been formed, in contrast to the known method, wherein first the corner supports are installed before the stack is realized.

In the method according to the present invention, furthermore, the lifting platform can be stepwise moved downwardly and when it emerges from the cage, after the corner supports have been installed, a strap can be fastened around one or more layers.

The present invention further relates to an apparatus for palletizing bagged products, such as onions, potatoes or the like, comprising a feed conveyor and a cage adapted to receive a pallet, characterized in that a reversing device is disposed above the feed conveyor, a bag drop device is mounted above the cage, downstream of the feed conveyor, and a lifting platform is movable through the cage.

The bag drop device may comprise two belt conveyors arranged in parallel relationship in the transport direction, which belt conveyors, at their distal side edges, are suspended in a frame for rotation about a longitudinally extending axis. There may further be provided means for combining the movements of the two bag drop belt conveyors. By combining these movements and moreover effecting them rapidly, it is ensured, partly due to the smalle interspace between the loading platform and the belt conveyors, that the filled bags to be deposited maintain a previously arranged, bonded pattern. When larger pallets are loaded, use can be made of a frame movable in transverse direction above the cage.

In a further embodiment of the present invention, one ore more movable retaining plates may be arranged above the bag drop device, thus achieving that the bags supplied cannot collide with bags already positioned on the belts of the drop device, so that when a further bag or bags are supplied, upsetting is produced, as a result of which the required bonded position is not achieved.

Outwardly of each corner of the cage, there may be arranged a corner support supply device, while above one or more of these devices there may be disposed a corner support pusher device, by means of which the corner supports can be moved downwardly until they project from underneath the cage and can be connected to a pallet at that location, e.g. by stapling.

The assembly can be computer-controlled, while the various positions can be determined by means of e.g. photo-electric cells.

One embodiment of the apparatus for palletizing bagged products according to the present invention will now be described, by way of example, with reference to the accompanying drawings, wherein:

Fig. 1 is a diagrammatic side view, with omission of a number of parts, of an apparatus for palletizing bags filled with onions, potatoes or the like;

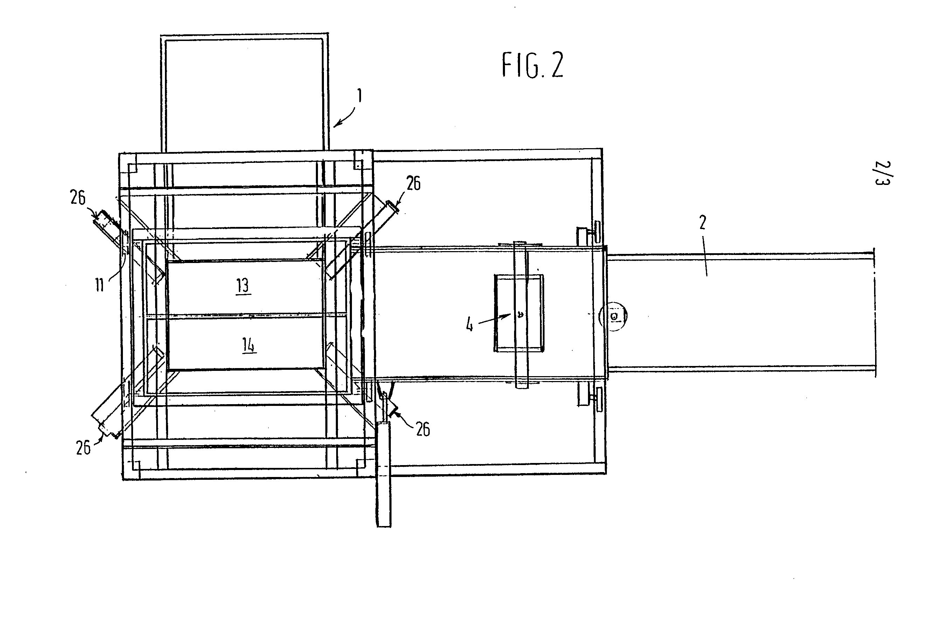

Fig. 2 is a top view of the apparatus of Fig. 1;

Fig. 3 is a diagrammatic side view of a part of the apparatus of Figs. 1 and 2;

Fig. 4 is a diagrammatic top view of the apparatus of Fig. 3;

Fig. 5 is a top view of a part of the apparatus of Figs. 1 and 2; and

Fig. 6 is a diagrammatic side view of the apparatus of Fig. 5.

As shown in the drawings, an apparatus 1 for palletizing bagged products, such as onions, potatoes and the like, comprises a feed belt 2, a belt conveyor 3 contiguous with the downstream end thereof, above which a reversing device is arranged in stationary relationship therewith. Downstream thereof, there is provided a bag drop device 5 arranged above a cage 6, within which is movable a lifting platform 8 designed as a roller conveyor 7. In the downward position of the platform 8, a delivery conveyor 9 links up with it.

The cage 6 is mounted in a frame 10, the top of which serves as a roller track for rollers 11 forming a support for an auxiliary frame 12 mounting both the belt conveyor 3 and the bag drop device 5.

The above bag reversing device 4 is a known per se device by means of which the bags supplied via feed belt 2 and belt conveyor 3 can, at choice, be either passed or rotated through 90°.

After passing the bag reversing device, the bags supplied lie in the proper position and are transferred in this position to the bag drop device 5.

The bag drop device essentially comprises two belt conveyors 13, 14, which are suspended in the auxiliary frame 12 at their distal longitudinal edges by means of pivots 15, 16. Because the auxiliary

-4-

frame 12 is arranged to travel on the frame 10, a plurality of rows of filled bags can be discharged in juxtaposed relationship. To prevent upsetting of bags during their supply, a retaining plate known per se, and hence not shown, is arranged above the belt conveyors.

After the belt conveyors have been loaded, with the filled bags arranged thereon in the required bonded position, the belt conveyors 13, 14 are moved about their pivots 15, 16. The movements of the two belt conveyors should be rapid and simultaneous.

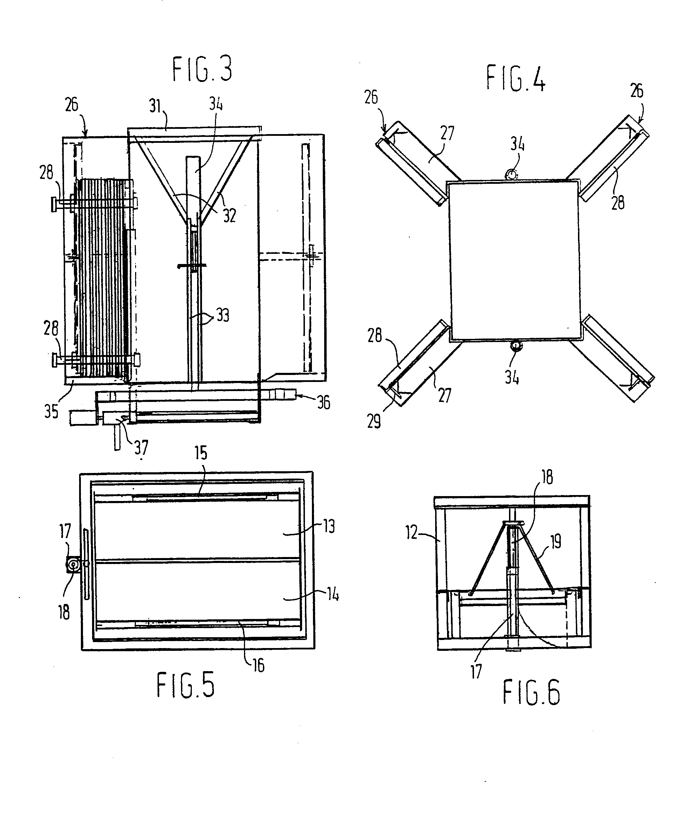

To this effect, the auxiliary frame is provided on the outside (Figs. 5, 6) with an air cylinder 17, the piston rod 18 of which is connected to one end of each of correcting rods 19, the other end of each of which is connected to either of the two belt conveyors 13, 14. Because the belt conveyors 13, 14 open outwardly, the drop is low, and the opening takes place quickly, it is ensured that the bonded position wherein the bags have been placed on belt conveyors 13, 14 is maintained during their deposition.

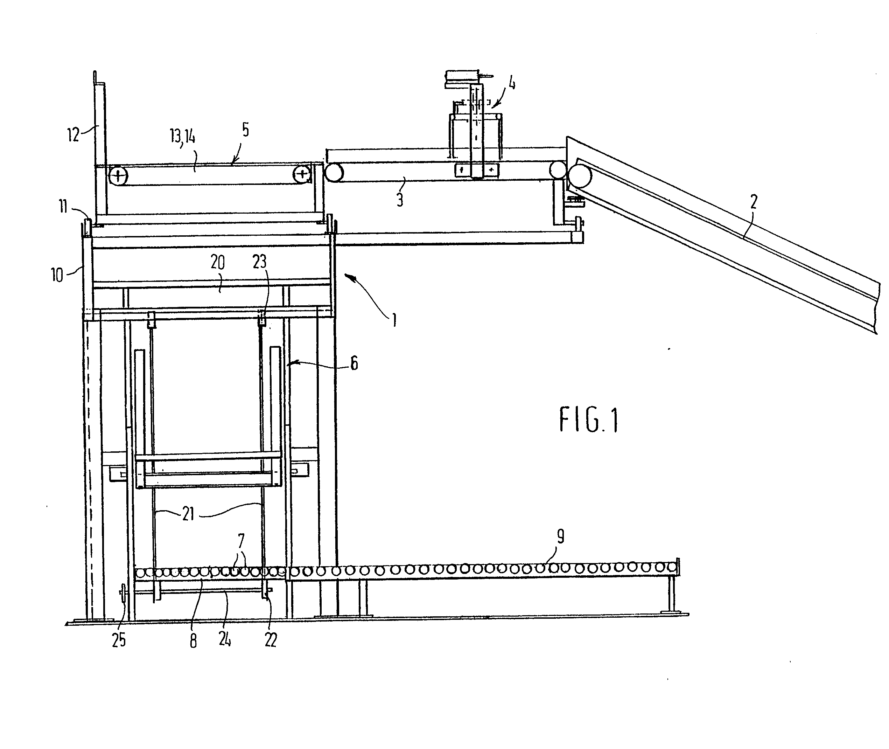

This depostion takes place on a pallet, not shown. The pallet is supplied laterally through a pallet supply opening 20. During this pallet supply, the lifting platform 8, consisting of rollers 7, is located adjacent the lower edge of said opening 20 (Fig. 1). The vertical movement of the lifting platform takes place by means of chains 21, which are mounted in the frame on chain wheels 22, 23, the first mentioned being mounted on a shaft 24, on a projecting end of which there is provided a pinion 25, which is driven by means not shown.

In the frame 10 there are further arranged adjacent the cage 6, corner support supply devices 26 (see Figs. 3, 4, each essentially consisting of a housing 27, with two air cylinders 28 being arranged outwardly thereof. The projecting end of the piston rod, not further shown, is fitted with a hold-down member 29, by means of which corner support portions disposed in the housing 27 are pressed against the corners of the cage. The corner supports are pushed downwards by means of a corner support pusher device 30. In the embodiment shown, one corner support pusher device is used for pushing two corner supports. The corner support pusher device 30 is provided with a corner pusher 31, attached to correcting rods 32, the other ends of which are received in correcting rails 33 and likewise connected to the end of the piston rod of a piston-and-cylinder assembly 34.

Adjacent the bottom of the cage 6, there is provided underneath the corner support housing 27, a sliding plate 35 ensuring that the corner supports supplied accurately abut against the outer sides of the pallet and the bags present thereon. Underneath the cage there is disposed successively a strapping or a sealing device 36 and a stapling device 37.

The sealing device will not be described hereinafter, since this is a known per se device, which is marketed by the company of Signode at Hoofddorp, The Netherlands. The device employed by Applicants is an "Automatic Signode Strapper, model HSMCTW-700Z".

Underneath it, there is provided at the corners at least one stapling device 37 by means of which the corner supports supplied are attached to the pallet support.

After the desired number of layers have been deposited on the pallet, and the layers have been provided with a strap in the desired manner, the platform 8 is moved downwardly until the rollers thereof are aligned with the rollers of the discharge belt 9. As soon as this alignment is attained, the loaded pallet is pushed from the lifting platform 8 onto the delivery belt 9 by means of a piston-and-cylinder assembly, not shown. Subsequently, the platform 8 moves again upwardly to adjacent the pallet supply opening 20 in order to receive the next pallet, after which its loading can be effected in the above described manner.

The whole apparatus is computer-controlled, while various positions are controlled by means of photo-electric cells.

The drives of the various parts have been omitted for the sake of clearness, since they will readily occur to one skilled in the art.

-6-

## C L A I M S

1.  A method of palletizing bagged products, such as onions, potatoes or the like, in which the bags are deposited in bonded relationship on a pallet arranged in a cage, while using corner supports, and subsequently, one or more straps are fastened around them, characterized in that a lifting platform for the pallet is movable through the cage open at the top and bottom, on which platform filled bags previously arranged in a bonded pattern, are deposited.

2.  A method according to claim 1, characterized in that the corner supports are arranged outwardly of the cage around the stack to be formed, are moved downwardly to underneath the level of the cage and subsequently are connected to the pallet.

3.  A method according to claim 2, characterized in that the lifting platform is stepwise moved downwardly and when it emerges from the cage, after the corner supports have been installed, a strap is fastened around one or more layers.

4.  An apparatus for palletizing bagged products, such as onions, potatoes or the like, comprising a feed conveyor and a cage, adapted to receive a pallet, characterized in that a reversing device is arranged above the feed conveyor, a bag drop device is mounted downstream of the feed conveyor, above the cage and a lifting platform is movable through the cage.

5.  An apparatus according to claim 4, characterized in that the bag drop device comprises two belt conveyors arranged in parallel relationship in the transport direction, which belt conveyors, at their distal side edges, are suspended in a frame for rotation about a longitudinally extending axis.

6.  An apparatus according to claim 4 or 5, characterized by means for combining the movement of the two bag drop belt conveyors.

7.  An apparatus according to claim 5 or 6, characterized in that said frame is movable in transverse direction above the cage.

8.    An apparatus according to any of claims 4-7, characterized in that one or more movable retaining plates are disposed above the bag drop device.

9.    An apparatus according to any of claims 4-8, characterized in that a corner support supply device is arranged outwardly of each corner of the cage.

10.    An apparatus according to claim 9, characterized in that a corner support pusher device is arranged above one or more corner support supply devices.

FIG.1

FIG.2

FIG.3

FIG.4

FIG.5

FIG.6

0157452

European Patent Office

**EUROPEAN SEARCH REPORT**

Application number

EP 85 20 0406

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 164 080 (MILLER) <br><br> * Column 2, line 72 - column 3, line 32; column 3, line 69 - column 4, line 61; figures 1-4 * | 1,4,7, 8 | B 65 G 57/24 <br> B 65 B 35/50 <br> B 65 G 57/06 |
| Y | | 3,5,6 | |
| Y | --- <br> US-A-3 312 357 (STEPHENS) <br> * Column 2, lines 59-67; figures 4,5 * | 5,6 | |
| Y | --- <br> FR-A-2 292 624 (COS. MEC) <br> * Page 6, lines 2-15 * | 3 | |
| | ----- | | |

TECHNICAL FIELDS SEARCHED (Int. Cl.4)

B 65 B
B 65 G

The present search report has been drawn up for all claims

| Place of search | Date of completion of the search | Examiner |
|---|---|---|
| THE HAGUE | 11-06-1985 | CLAEYS H.C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82